# EUROPÄISCHE PATENTSCHRIFT

(11) **EP 3 604 803 B1**
(45) Veröffentlichungstag und Bekanntmachung des Hinweises auf die Patenterteilung: **12.07.2023**
(21) Anmeldenummer: 18187377.9
(22) Anmeldetag: 03.08.2018
(51) Int. Cl.: F03D 17/00

(54) **VERFAHREN ZUM BETREIBEN EINES TRIEBSTRANGS UND PROGRAMMPRODUKT**
METHOD FOR OPERATING A DRIVETRAIN AND PROGRAM PRODUCT
PROCÉDÉ DE FONCTIONNEMENT D'UNE CHAÎNE CINÉMATIQUE ET PRODUIT DE PROGRAMME

(43) Veröffentlichungstag der Anmeldung: 05.02.2020
(73) Patentinhaber: Universität Stuttgart, 70174 Stuttgart (DE)
(72) Erfinder: Bernd, Bertsche, 70197 Stuttgart (DE); Zeljana, Beslic, 71032 Böblingen (DE); Yvonne, Gretzinger, 70374 Stuttgart (DE)
(74) Vertreter: Ege Lee & Roider Patentanwälte

(56) Entgegenhaltungen:
- WO-A2-2009/133161
- DE-A1- 10 102 773
- DE-A1-102010 002 376
- DE-A1-102011 117 468
- DE-A1-102015 210 911
- DE-A1-102016 222 660

## Beschreibung

Die Erfindung betrifft ein Verfahren zum Betreiben eines Triebstrangs mit einem Leistungsgeber, einer mechanischen Leistungsübertragungsvorrichtung und einem Leistungsnehmer, wobei die Leistungsübertragungsvorrichtung überwacht wird, um mechanische Schäden und/oder ein Entstehen mechanischer Schäden an der Leistungsübertragungsvorrichtung zu erkennen. Außerdem betrifft die Erfindung ein Programmprodukt.

Aus dem Dokument DE 10 2011 117 468 A1 ist ein Verfahren bekannt zur Überwachung eines Zustands eines Antriebsstrangs, insbesondere einer Windenergieanlage, der wenigstens eine mechanisch mit einem rotierenden Element des Antriebsstrangs verbundene Komponente aufweist, auf der in einem Abstand zu einer Rotationsachse des Antriebsstrangs wenigstens ein Beschleunigungssensor angeordnet ist, der in dem Abstand um die Rotationsachse des Antriebsstrangs umläuft, wobei ein Signal des wenigstens einen Beschleunigungssensors der wenigstens einen Komponente bei wenigstens einer Drehzahl des rotierenden Elements zeitlich erfasst und auf Störfrequenzen hin untersucht wird, die Schäden in dem Antriebsstrang entsprechen. Das zeitlich erfasste Signal wird auf Störfrequenzen hin untersucht, die zumindest Zahnradschäden, Planetenradschäden und/oder Lagerschäden entsprechen. Das zeitlich erfasste Signal wird auf Wälzlagerfrequenzen, insbesondere auf die Käfigrotationsfrequenz bei feststehendem Außenring, die Käfigrotationsfrequenz bei feststehendem Innenring, die Überrollfrequenz einer Unregelmäßigkeit auf dem Außenring, die Überrollfrequenz einer Unregelmäßigkeit auf dem Innenring, die Wälzkörperrotationsfrequenz und/oder die Überrollfrequenz einer Wälzkörperunregelmäßigkeit auf beiden Wälzbahnen untersucht.

Aus dem Dokument DE 10 2015 210 911 A1 ist ein Verfahren bekannt zum Erkennen von Abweichungen und/oder Veränderungen in wenigstens einem Betriebszustand eines elektrisch, insbesondere elektromotorisch, betriebenen Antriebs, insbesondere zum Erkennen eines Vorliegens und/oder eines Auftretens und/oder einer Entwicklung von Schäden, bevorzugt mechanischer Schäden, an einem derartigen Antrieb, umfassend die Schritte: Messen wenigstens eines dem elektrisch betriebenen Antrieb zum Speisen mit elektrischer Energie zugeführten elektrischen Stroms; Durchführen einer Zeit-Frequenz-Analyse und/ oder einer Amplituden- und/oder Effektivwertbestimmung des wenigstens einen gemessenen elektrischen Stroms; Vergleichen eines aus der Zeit-Frequenz-Analyse gewonnenen Frequenzspektrums des wenigstens einen gemessenen elektrischen Stroms mit einem vorgebbaren Frequenzspektrum; Vergleichen eines aus der Amplituden- und/oder Effektivwertbestimmung gewonnenen Amplitudenwertes und/oder Effektivwertes des wenigstens einen gemessenen elektrischen Stroms mit einem vorgebbaren Amplitudenwert bzw. Effektivwert; Auslösen eines Fehlersignals, wenn beim Vergleichen von gewonnenem mit vorgebbarem Frequenzspektrum und/oder Amplitudenwert und/oder Effektivwert eine Abweichung vorgebbarer Größe festgestellt wird. Durch das Fehlersignal wird ein Eingriff in einen Betrieb des elektrisch, insbesondere elektromotorisch, betriebenen Antriebs, insbesondere ein wenigstens teilweises Außerbetriebsetzen des elektrisch, insbesondere elektromotorisch, betriebenen Antriebs, ausgelöst und/oder gesteuert.

Dem Dokument DE 10 2015 210 911 A1 zufolge erfolgt das Außerbetriebsetzen im einfachsten Fall durch komplettes Abschalten des als fehlerhaft erkannten Antriebs, jedoch können je nach erkannter Art des Fehlers unterschiedliche Formen des Außerbetriebsetzens vorgesehen sein. Beispielsweise kann bei Erkennen eines Überschreitens einer Verschleißgrenze der betroffene Antrieb in einem Übergangszeitintervall unter Ausgabe einer Fehlermeldung verlangsamt weiterbetrieben werden, um größere Beeinträchtigungen der Leistung umgebender bzw. mit dem betroffenen Antrieb zusammenwirkender Anlagenteile zu vermeiden, aber schlagartig abgeschaltet werden, sobald eine Zerstörung eines Bauteils des Antriebs erkannt wird.

Das Dokument DE 10 2016 222 660 A1 betrifft ein Verfahren zum Erkennen von Abweichungen und/oder Veränderungen in wenigstens einem Betriebszustand eines elektrisch, insbesondere elektromotorisch, betriebenen Antriebs, insbesondere zum Erkennen eines Vorliegens und/oder eines Auftretens und/oder einer Entwicklung von Schäden, bevorzugt mechanischer Schäden, an einem derartigen Antrieb. Dem Dokument DE 10 2016 222 660 A1 zufolge wird vorgeschlagen, folgende Schritte durchzuführen: Messen wenigstens eines dem elektrisch betriebenen Antrieb zum Speisen mit elektrischer Energie zugeführten elektrischen Stroms, Durchführen einer Zeit-Frequenz-Analyse und/oder einer Amplituden- und/oder Effektivwertbestimmung des wenigstens einen gemessenen elektrischen Stroms, Vergleichen eines aus der Zeit-Frequenz-Analyse gewonnenen Frequenzspektrums des wenigstens einen gemessenen elektrischen Stroms mit einem vorgebbaren Frequenzspektrum und/oder Vergleichen eines aus der Amplituden- und/oder Effektivwertbestimmung gewonnenen Amplitudenwertes und/oder Effektivwertes des wenigstens einen gemessenen elektrischen Stroms mit einem vorgebbaren Amplitudenwert bzw. Effektivwert, wobei das wenigstens eine Teil-Frequenzspektrum und/oder der Amplituden- und /oder Effektivwert von einer bestimmten Art und/oder einem bestimmten Ort einer bestimmten frequenzabhängigen Abweichung und/oder Veränderung in wenigstens einem der Betriebszustände, insbesondere einem bestimmten Schaden, des elektrisch, insbesondere elektromotorisch, betriebenen Antriebs herrührt, wobei dieser Schaden an einem translatorisch bewegten Bauteil des Antriebs verursacht ist, Auslösen eines Fehlersignals, wenn beim Vergleichen von gewonnenem mit vorgebbarem Frequenzspektrum und/oder Amplitudenwert und/oder Effektivwert eine Abweichung vorgebbarer Größe festgestellt wird.

Das Dokument DE 101 02 773 A1 betrifft eine Überwachungsvorrichtung für ein Fahrzeug, das einen Antriebsmotor aufweist. Um eine Vielzahl von Komponenten des Triebstranges in kostengünstiger Weise zu überwachen und frühzeitig entsprechende Fehlerzustände zu erkennen, weist die Überwachungsvorrichtung aus dem Dokument DE 101 02 773 A1 Mittel, die ein erstes Signal (SMS) erzeugen, das ein Sollantriebsmoment angibt, eine Sensorik, die ein Istantriebsmoment erfasst und ein zweites Signal (SMI) erzeugt, das das Istantriebsmoment angibt, und eine Auswerteeinrichtung, der das erste Signal (SMS) und das zweite Signal (SMI) zugeführt wird, um auf mögliche Fehlerzustände im Triebstrang des Fahrzeugs zu schließen, auf.

Der Erfindung liegt die Aufgabe zugrunde, ein eingangs genanntes Verfahren zu verbessern. Außerdem liegt der Erfindung die Aufgabe zugrunde, ein eingangs genanntes Programmprodukt zu verbessern.

Die Aufgabe wird gelöst mit einem Verfahren mit den Merkmalen des Anspruchs 1. Außerdem wird die Aufgabe gelöst mit einem Programmprodukt mit den Merkmalen des Anspruchs 6. Vorteilhafte Weiterbildungen sind Gegenstand der abhängigen Ansprüche.

Das Verfahren kann mithilfe eines Programms, eines Computers und/oder einer sonstigen programmierbaren Vorrichtung durchgeführt werden. Der Triebstrang kann ein Triebstrang einer Windkraftanlage sein. Der Triebstrang kann ein Antriebsstrang sein. Der Antriebsstrang kann ein Antriebsstrang eines Fahrzeugs sein. Das Fahrzeug kann ein Kraftfahrzeug sein. Das Fahrzeug kann ein brennkraftmaschinengetriebenes Fahrzeug, ein Hybridelektrokraftfahrzeug oder ein Elektrokraftfahrzeug sein. Der Leistungsgeber kann dazu dienen, eine mechanische Leistung abzugeben. Der Leistungsgeber kann ein Rotor, ein Motor, eine Kraftmaschine, eine Brennkraftmaschine oder ein Elektromotor sein.

Die Leistungsübertragungsvorrichtung kann dazu dienen, eine mechanische Leistung zu übertragen. Die mechanische Leistung kann durch ein Drehmoment und/oder eine Drehzahl bestimmt sein. Die Leistungsübertragungsvorrichtung kann dazu dienen, eine mechanische Leistung zu wandeln. Die Leistungsübertragungsvorrichtung kann ein Getriebe sein. Das Getriebe kann ein mechanisches Getriebe sein. Das Getriebe kann ein festes Getriebe oder ein Schaltgetriebe sein. Das Getriebe kann ein Rädergetriebe sein. Das Getriebe kann ein Zahnradgetriebe sein. Das Getriebe kann ein Umlaufrädergetriebe sein. Das Getriebe kann Wellen und/oder Zahnräder aufweisen.

Der Leistungsnehmer kann dazu dienen, eine mechanische Leistung abzunehmen. Der Leistungsnehmer kann ein Generator oder ein antreibbares Fahrzeugrad sein. Die Leistungsübertragungsvorrichtung kann in dem Triebstrang zwischen dem Leistungsgeber und dem Leistungsnehmer angeordnet und/oder wirksam sein. Eine mechanische Leistung kann ausgehend von dem Leistungsgeber über die Leistungsübertragungsvorrichtung zu dem Leistungsnehmer fließen. Eine Leistungsflussrichtung kann umkehrbar sein. Die Leistungsübertragungsvorrichtung kann einer Wechselbeanspruchung unterliegen.

Die Leistungsübertragungsvorrichtung kann mithilfe von Sensoren, wie Beschleunigungssensoren, Körperschallsensoren, Schwingungssensoren, Positionssensoren, Drehpositionssensoren und/oder Drehzahlsensoren, unabhängig von Sensoren vorliegender Signale, wie Spannung und/oder Moment eines Elektromotors, und/oder eines Computers oder einer sonstigen programmierbaren Vorrichtung überwacht werden. Mithilfe der Sensoren können Sensorsignale zur Verfügung gestellt werden. Die Sensorsignale und/oder die unabhängig von Sensoren vorliegenden Signale können dem Computer oder der sonstigen programmierbaren Vorrichtung zur Verfügung stehen. Die Sensorsignale und/oder die unabhängig von Sensoren vorliegenden Signale können mithilfe des Computers oder der sonstigen programmierbaren Vorrichtung ausgewertet werden, um mechanische Schäden und/oder ein Entstehen mechanischer Schäden an der Leistungsübertragungsvorrichtung zu erkennen. Die Sensorsignale und/oder die unabhängig von Sensoren vorliegenden Signale können mithilfe des Computers oder der sonstigen programmierbaren Vorrichtung ausgewertet werden, um einen erkannten Schaden und/oder eine erkannte Schadensentstehung zu lokalisieren. Der Leistungsgeber, die Leistungsübertragungsvorrichtung und/oder der Leistungsnehmer können/kann mithilfe des Computers oder der sonstigen programmierbaren Vorrichtung kontrolliert werden. Der Leistungsgeber, die Leistungsübertragungsvorrichtung und/oder der Leistungsnehmer können/kann wenigstens einen kontrollierbaren Aktuator aufweisen. Der wenigstens eine Aktuator kann mithilfe des Computers oder der sonstigen programmierbaren Vorrichtung kontrolliert werden. "Kontrollieren" bezeichnet vorliegend insbesondere ein steuerungstechnisches und/oder regelungstechnisches Kontrollieren.

Ein erkannter Schaden und/oder eine erkannte Schadensentstehung wird nach seinem/ihrem Drehwinkel oder Drehwinkelbereich lokalisiert. Der Drehwinkelbereich kann weniger als ca. 90°, insbesondere weniger als ca. 60°, insbesondere weniger als ca. 30°, insbesondere weniger als ca. 20°, insbesondere weniger als 10°, insbesondere weniger als 5°, betragen.

Eine mechanische Belastung an der lokalisierten Schadensstelle und/oder Schadensentstehungsstelle kann in Korrelation zu der lokalisierten Schadensstelle und/oder Schadensentstehungsstelle reduziert werden. Die mechanische Belastung an der lokalisierten Schadensstelle und/oder Schadensentstehungsstelle kann periodisch reduziert werden. Die Periodizität kann mit dem lokalisierten Schaden und/oder der lokalisierten Schadensentstehung korreliert werden. Die Periodizität kann mit einer Drehzahl des Leistungsgebers, der Leistungsübertragungsvorrichtung und/oder des Leistungsnehmer korreliert werden. Beispielsweise kann der Leistungsgeber derart kontrolliert werden, dass korreliert mit der lokalisierten Schadensstelle und/oder Schadensentstehungsstelle eine reduzierte mechanische Leistung abgegeben wird.

Der Leistungsgeber, die Leistungsübertragungsvorrichtung und/oder der Leistungsnehmer können/kann derart kontrolliert werden, dass eine vorgegebene Gesamtausgangsleistung zumindest annähernd erhalten bleibt. Beispielsweise kann der Leistungsgeber derart kontrolliert werden, dass korreliert mit der lokalisierten Schadensstelle und/oder Schadensentstehungsstelle eine reduzierte und anderweitig eine erhöhte mechanische Leistung abgegeben wird.

Die Leistungsübertragungsvorrichtung kann um eine Drehachse drehbare oder umlaufende Maschinenelemente aufweisen. Die Leistungsübertragungsvorrichtung kann miteinander in Wälzkontakt stehende Maschinenelemente aufweisen. Die Maschinenelemente können Lager sein. Die Lager können Wälzlager sein. Die Wälzlager können Wälzkörper und Laufflächen für die Wälzkörper aufweisen. Der Wälzkontakt kann zwischen den Wälzkörpern und den Laufflächen vorliegen. Die Leistungsübertragungsvorrichtung kann miteinander in Wälzkontakt stehende Zahnräder aufweisen. Die Maschinenelemente können Zahnräder sein. Die Zahnräder können Zähne aufweisen. Die Zähne können Zahnflanken aufweisen. Der Wälzkontakt kann zwischen den Zahnflanken ineinander eingreifender Zähne vorliegen. Der Wälzkontakt kann mit einer Pressung verbunden sein. Die Leistungsübertragungsvorrichtung kann überwacht werden, um wälzkontaktbedingte Schäden und/oder ein Entstehen wälzkontaktbedingter Schäden an den Maschinenelementen, wie Lager und/oder Zahnrädern, zu erkennen und zu lokalisieren. Wälzkontaktbedingte Schäden können infolge dauernder Be- und Entlastungen auftreten. Wälzkontaktbedingte Schäden können grübchenartige Vertiefungen sein. Derartige Vertiefungen können auch als Pittings bezeichnet werden.

Der Leistungsgeber, die Leistungsübertragungsvorrichtung und/oder der Leistungsnehmer können/kann derart kontrolliert werden, dass eine mechanische Belastung an der lokalisierten Schadensstelle und/oder Schadensentstehungsstelle zahngruppen- oder zahngenau reduziert wird. Die Belastungsreduktion kann mit einer Auflösung, mit der Schadensstellen und/oder Schadensentstehungsstellen lokalisierbar sind, korreliert werden. Die Belastung kann derart reduziert werden, dass die lokalisierte Schadensstelle und/oder Schadensentstehungsstelle mit einer vorgegebenen Sicherheit entlastet wird.

Das Programmprodukt kann auf einem Speichermedium gespeichert sein. Das Speichermedium kann ein Datenträger sein. Das Programmprodukt kann als Signal vorliegen. Das Signal kann kabelgebunden und/oder kabellos übertragbar sein. Das Speichermedium und/oder das Signal können/kann computerlesbar sein. Die sonstige programmierbare Vorrichtung kann ein elektrisches Steuergerät sein. Der Computer oder die sonstige programmierbare Vorrichtung kann zum Kontrollieren von Maschinen, Anlagen und sonstigen technischen Prozessen dienen.

Zusammenfassend und mit anderen Worten dargestellt ergibt sich somit durch die Erfindung unter anderem eine Regelungsstrategie zur gezielten Entlastung von bewegten Maschinenelementen bei Schädigung. Die Regelungsstrategie gehört zu einem Schonverfahren und kann ausgehend von einer topografischen Änderung einer Oberfläche einer abwälzenden Kraftübertragungsschnittstelle innerhalb von relativ zueinander bewegten Maschinenelemente eine gezielte Entlastung hervorrufen. Die Entlastung kann an der Schnittstelle der topografischen Änderung der Oberfläche, die mit einer Sensoreinrichtung erfasst wird, durch eine singuläre Reduktion einer Belastung erfolgen. Die Reduktion kann mittels einer Aktoreinrichtung, welche zu einem Abbau einer Presskraft eines Flächenpressungsmusters innerhalb der Grundeinstellung führt, erfolgen. Innerhalb eines Regelkreises können die übertragenden Presskräfte hauptsächlich an einer mit lokalen, topologischen Veränderungen behafteten Kraftübertragungsschnittstelle von der Grundeinstellung abweichen. Eine Zähnezahl und eine Nummer des Zahns des durch Grübchen beschädigten Zahnrads können Eingangsparameter der Regelungsstrategie innerhalb eines Getriebes bilden. Durch eine Lokalisierung eines Schadens mit Hilfe von bekannten Diagnosetechniken kann nun gezielt an einem punktuellen Schaden eine Reduktion des Drehmoments herbeigeführt werden, um einer beschädigten Zahnflanke Entlastung zu verschaffen, sodass ohne oder zumindest mit nur geringen Einbußen einer Gesamtleistung eine Hertzsche Pressungsverteilung lokal abnimmt. Die Entlastung kann sowohl antrieb- als auch abtriebsseitig erfolgen. Beispielsweise kann antriebseitig eine Regelungsstrategie in einem Motorsteuergerät hinterlegt werden, welches über eine geschlossene Regelung Ausgangssignale für eine zahngenaue, punktuelle Reduktion eines Motormoments an Aktoren übergibt.

Mit "kann" sind insbesondere optionale Merkmale der Erfindung bezeichnet. Demzufolge gibt es jeweils ein Ausführungsbeispiel der Erfindung, das das jeweilige Merkmal oder die jeweiligen Merkmale aufweist.

Mit der Erfindung wird eine Betriebsfähigkeit verbessert. Ein Betriebsverhalten wird verbessert. Ein Schadensfortschritt wird verzögert. Ausfallzeiten werden aufgeschoben und/oder reduziert. Ein Aufwand, wie Wartungsaufwand, Konstruktionsaufwand, Fertigungsaufwand, Zeitaufwand und/oder Kostenaufwand, wird reduziert. Eine erforderliche Belastungsfähigkeit kann reduziert werden. Durch einen Schonbetrieb können/kann eine Lebensdauer gesteigert werden oder bei gleicher Lebensdauer eine Zahnbreite verringert, Fertigungstoleranzen/Verzahnungskorrekturen vergrößert und/oder Korrekturen hinsichtlich Akustik optimiert werden.

Nachfolgend wird ein Ausführungsbeispiel der Erfindung unter Bezugnahme auf Figuren näher beschrieben. Aus dieser Beschreibung ergeben sich weitere Merkmale und Vorteile. Konkrete Merkmale dieses Ausführungsbeispiels können allgemeine Merkmale der Erfindung darstellen. Mit anderen Merkmalen verbundene Merkmale dieses Ausführungsbeispiels können auch einzelne Merkmale der Erfindung darstellen.

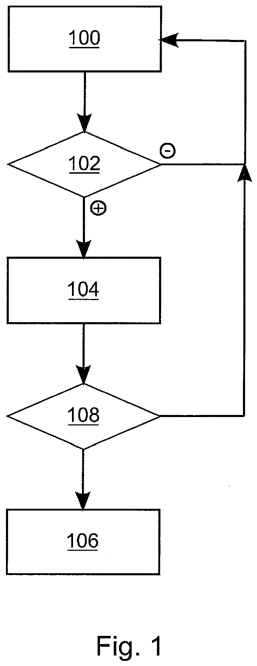

Fig. 1 zeigt schematisch und beispielhaft eine Regelungsstrategie zur gezielten Entlastung von miteinander in Wälzkontakt stehenden Maschinenelementen bei Schädigung.

Ausgehend von einem Normalbetrieb 100 wird eine Leistungsübertragungsvorrichtung, die miteinander in Wälzkontakt stehende Maschinenelemente, wie Lager und/oder Zahnräder, aufweist, überwacht, um mechanische Schäden und/oder ein Entstehen mechanischer Schäden zu erkennen.

Die Leistungsübertragungsvorrichtung ist in einem mechanischen Leistungsfluss zwischen einem Leistungsgeber und einem Leistungsnehmer wirksam. In dem Normalbetrieb 100 weist die Leistungsübertragungsvorrichtung keine mechanischen Schäden auf und ein Entstehen mechanischer Schäden ist nicht zu erkennen. In dem Normalbetrieb 100 wird der Leistungsgeber derart kontrolliert, dass über einen gesamten Drehwinkelbereich von 360° eine vorgegebene Ausgangsleistung, soweit der Leistungsgeber dazu in der Lage ist, zumindest annähernd konstant zur Verfügung steht.

Ergibt die Überwachung 102, dass kein Schaden vorliegt und/oder keine Schaden im Entstehen ist, wird der Normalbetrieb 100 fortgesetzt.

Ergibt die Überwachung 102, dass ein Schaden vorliegt und/oder ein Schaden im Entstehen ist, folgt eine Lokalisierung 104 einer Schadensstelle und/oder einer Schadensentstehungsstelle. Die Schadensstelle und/oder einer Schadensentstehungsstelle wird nach ihrem Drehwinkel lokalisiert. Beispielsweise wird ein beschädigter oder gefährdeter Zahn eines Zahnrads bestimmt.

Nach der Lokalisierung 104 erfolgt anstelle des Normalbetriebs 100 ein Schonbetrieb 106. In dem Schonbetrieb 106 werden/wird der Leistungsgeber und/oder der Leistungsnehmer derart kontrolliert, dass im Drehwinkelbereich der Schadensstelle und/oder einer Schadensentstehungsstelle eine mechanische Belastung reduziert wird. In den übrigen Drehwinkelbereichen kann die vorgegebene Ausgangsleistung ungeändert bleiben oder erhöht werden, um eine Gesamtausgangsleistung über den gesamten Drehwinkelbereich von 360° zumindest annähernd zu erhalten.

Optional können/kann ein Schaden und/oder eine Schadensentstehung qualitativ bewertet werden. Wenn die Bewertung 108 ergibt, dass der Schaden und/oder die Schadensentstehung unterhalb einer vorgegebenen Grenze liegen/liegt, kann der Normalbetrieb 100 beibehalten werden. Wenn die Bewertung 108 ergibt, dass der Schaden und/oder die Schadensentstehung oberhalb einer vorgegebenen Grenze liegen/liegt, kann der Schonbetrieb 106 initiiert werden. Der Schonbetrieb 106 kann unter Berücksichtigung der Bewertung 108 kontrolliert werden, um eine Leistungsreduktion quantitativ an einen Schaden und/oder eine Schadensentstehung anzupassen. Das Kontrollieren kann dabei auch eine zahngenaue Abfrage nach Grübchen und eine daran angepasste lokale Reduktion am Grübchen und lokale Erhöhung bei gesunden Zähnen umfassen.

### Bezugszeichen

- 100: Normalbetrieb
- 102: Überwachung
- 104: Lokalisierung
- 106: Schonbetrieb
- 108: Bewertung

## Patentansprüche

1. Verfahren zum Betreiben eines Triebstrangs mit einem Leistungsgeber, einer mechanischen Leistungsübertragungsvorrichtung und einem Leistungsnehmer, wobei die Leistungsübertragungsvorrichtung überwacht wird, um mechanische Schäden und/oder ein Entstehen mechanischer Schäden an der Leistungsübertragungsvorrichtung zu erkennen, **dadurch gekennzeichnet, dass** ein erkannter Schaden und/oder eine erkannte Schadensentstehung nach seinem/ihrem Drehwinkel oder Drehwinkelbereich lokalisiert und der Leistungsgeber, die Leistungsübertragungsvorrichtung und/oder der Leistungsnehmer derart kontrolliert werden/wird, dass eine mechanische Belastung an der lokalisierten Schadensstelle und/oder Schadensentstehungsstelle selektiv reduziert wird.

2. Verfahren nach Anspruch 1, **dadurch gekennzeichnet, dass** der Leistungsgeber, die Leistungsübertragungsvorrichtung und/oder der Leistungsnehmer derart kontrolliert werden/wird, dass eine vorgegebene Gesamtausgangsleistung zumindest annähernd erhalten bleibt.

3. Verfahren nach wenigstens einem der vorhergehenden Ansprüche, **dadurch gekennzeichnet, dass** die Leistungsübertragungsvorrichtung miteinander in Wälzkontakt stehende Maschinenelemente aufweist und die Leistungsübertragungsvorrichtung überwacht wird, um wälzkontaktbedingte Schäden und/oder ein Entstehen wälzkontaktbedingter Schäden an den Maschinenelementen zu erkennen und zu lokalisieren.

4. Verfahren nach wenigstens einem der vorhergehenden Ansprüche, **dadurch gekennzeichnet, dass** die Leistungsübertragungsvorrichtung miteinander in Wälzkontakt stehende Zahnräder aufweist und die Leistungsübertragungsvorrichtung überwacht wird, um wälzkontaktbedingte Schäden und/oder ein Entstehen wälzkontaktbedingter Schäden an den Zahnrädern zu erkennen und zu lokalisieren.

5. Verfahren nach Anspruch 4, **dadurch gekennzeichnet, dass** der Leistungsgeber, die Leistungsübertragungsvorrichtung und/oder der Leistungsnehmer derart kontrolliert werden/wird, dass eine mechanische Belastung an der lokalisierten Schadensstelle und/oder Schadensentstehungsstelle zahngruppen- oder zahngenau reduziert wird.

6. Programmprodukt, **dadurch gekennzeichnet, dass** das Programmprodukt Programmcodeabschnitte umfasst, mit denen ein Verfahren nach wenigstens einem der vorhergehenden Ansprüche durchführbar ist, wenn das Programmprodukt auf einer programmierbaren Kontrolleinrichtung, einem Computer oder einer sonstigen programmierbaren Vorrichtung ausgeführt wird.

## Claims

1. Method for operating a drive train with a power generator, a mechanical power transmission device and a power consumer, wherein the power transmission device is monitored in order to detect mechanical damage and/or the development of mechanical damage to the power transmission device, **characterised in that** any detected damage and/or detected development of damage is/are located according to its/their angle of rotation or range of angles of rotation, and the power generator, the power transmission device and/or the power consumer is/are controlled such that a mechanical load is selectively reduced at the identified location of damage and/or location of developing damage.

2. Method according to claim 1, **characterised in that** the power generator, the power transmission device and/or the power consumer is/are controlled such that a predetermined total output power is maintained at least approximately.

3. Method according to at least one of the preceding claims, **characterised in that** the power transmission device has machine elements that are in rolling contact with one another and the power transmission device is monitored in order to detect and locate rolling contact-related damage and/or the development of rolling contact-related damage to the machine elements.

4. Method according to at least one of the preceding claims, **characterised in that** the power transmission device has gears in rolling contact with one another and
the power transmission device is monitored in order to detect and locate rolling contact-related damage and/or the development of rolling contact-related damage to the gears.

5. Method according to claim 4, **characterised in that** the power generator, the power transmission device and/ or the power consumer is/are controlled such that a mechanical load at the identified location of damage and/or the location of developing damage is reduced for a specific tooth group or tooth.

6. Program product **characterised in that** the program product comprises program code sections by which a method according to at least one of the preceding claims can be executed when the program product is implemented on a programmable control device, a computer or other programmable device.

## Revendications

1. Procédé de fonctionnement d'une chaîne cinématique comportant un émetteur de puissance, un dispositif de transmission de puissance mécanique et un récepteur de puissance, le dispositif de transmission de puissance étant surveillé afin de détecter des dommages mécaniques et/ou une apparition de dommages mécaniques sur le dispositif de transmission de puissance, **caractérisé en ce qu'**un dommage détecté et/ou une apparition de dommage détectée est localisé(e) selon son angle de rotation ou sa plage d'angles de rotation et l'émetteur de puissance, le dispositif de transmission de puissance et/ou le récepteur de puissance sont/est contrôlé(s) de telle sorte qu'une charge mécanique est réduite de manière sélective au niveau du point de dommage localisé et/ou du point d'apparition de dommage.

2. Procédé selon la revendication 1, **caractérisé en ce que** l'émetteur de puissance, le dispositif de transmission de puissance et/ou le récepteur de puissance sont/est contrôlé(s) de telle sorte qu'une puissance de sortie totale prédéterminée soit au moins approximativement maintenue.

3. Procédé selon au moins l'une des revendications précédentes, **caractérisé en ce que** le dispositif de transmission de puissance présente des éléments de machine en contact de roulement les uns avec les autres et **en ce que** le dispositif de transmission de puissance est surveillé afin de détecter et de localiser des dommages dus au contact de roulement et/ou une apparition de dommages dus au contact de roulement sur les éléments de machine.

4. Procédé selon au moins l'une des revendications précédentes, **caractérisé en ce que** le dispositif de transmission de puissance présente des roues dentées en contact de roulement les unes avec les autres et **en ce que** le dispositif de transmission de puissance est surveillé afin de détecter et de localiser des dommages dus au contact de roulement et/ou une apparition de dommages dus au contact de roulement sur les roues dentées.

5. Procédé selon la revendication 4, **caractérisé en ce que** l'émetteur de puissance, le dispositif de transmission de puissance et/ou le récepteur de puissance sont/est contrôlé(s) de telle sorte qu'une charge mécanique est réduite au niveau du point de dommage localisé et/ou du point d'apparition du dommage, de manière précise par groupe de dents ou par dent.

6. Produit de programme, **caractérisé en ce que** ledit produit de programme comprend des sections de code de programme avec lesquelles un procédé selon au moins l'une des revendications précédentes peut être mis en oeuvre lorsque le produit de programme est exécuté sur un dispositif de commande programmable, un ordinateur ou un autre dispositif programmable.
